# EUROPÄISCHE PATENTANMELDUNG

(11) **EP 0 849 864 A2**
(43) Veröffentlichungstag der Anmeldung: **24.06.1998**
(21) Anmeldenummer: 97122582.6
(22) Anmeldetag: 20.12.1997
(51) Int. Cl.: H02K 9/00, H02K 5/136

(54) **Einrichtung zur Vorspülung und erzeugung von Überdruck im Bereich des Wickelkopfes einer drehenden elektrischen Hochspannungsmaschine**

(30) Priorität: 21.12.1996 DE 19653827
(71) Anmelder: VEM-Elektroantriebe GmbH, 01242 Dresden (DE)
(72) Erfinder: Kielmann, Frieder Dr.-Ing., 01277 Dresden (DE); Schönthier, Heinz Dr.-Ing, 01309 Dresden (DE); Zima, Hans, 01277 Dresden (DE)
(74) Vertreter: Weissfloh, Ingo

(57) **Zusammenfassung**

Der Erfindung liegt das Problem zugrunde, eine technische sichere Lösung für einen Explosionsshutz einer drehenden elektrischen Hochspannungsmaschine bei gleichzeitiger Verbesserung der Kühlung im Wickelkopfbereich dieser Maschine zu schaffen.

Erfindungsgemäß wird dazu eine Einrichtung zur Erzeugung von Überdruck im Wickelkopfbereich eingesetzt. Die Einrichtung besteht aus einem Drucksteuerring 1, der am Umfang mit Düsen 3 unterschiedlichen Durchmessers in alle Richtungen des Wickelkopfbereiches versehen ist. Aus einem Gasbehälter 4, gefüllt mit einem Inertgas, kann das Gas unter Druck über einen Druckschlauch 5 und den Drucksteuerring 1 bis in den Wickelkopfbereich geführt werden.

Der Einsatz der Erfindung ist insbesondere bei drehenden elektrischen Hochspannungsmaschinen mit und ohne Explosionsschutzausführung gegeben.

## Beschreibung

Die Erfindung bezieht sich auf drehende Hochspannungsmaschinen, die durch Einsatz eines unter Druck stehenden Inertgas im Wickelkopfbereich die Durchschlags- und Teilentladungsfestigkeit von insbesondere explosionsgeschützten Maschinen erhöhen soll.

### Stand der Technik

Bei gasgekühlten, drehenden elektrischen Maschinen wird im Allgemeinen mittels Axiallüftern die erforderliche Kühlgasmenge auch mit einer gewissen Druckhöhe bis in den Wickelkopfraum gefördert. Besondere Ausführungsformen der Lüfter oder durch Zusatzeinrichtungen sollen die Kühlgasmenge und -strömungsrichtung positiv beeinflussen.

So wird in der EP 0 544 023 ein spezielles, ringförmiges Luftführungsorgan eingesetzt, um einmal die Wirkungsweise des Axiallüfters zu erhöhen und gleichzeitig eine gleichmäßigere Kühlwirkung im Wickelkopfraum zu erreichen. Das Luftführungsorgan ist dem Axiallüfter vorgeschaltet. Durch eine Abdeckung wird das durch das Luftführungsorgan hindurchströmende Kühlgas in Hauptrichtung der Zuströmung gedrosselt und im Endeffekt gleichmäßiger auf den Wickelkopf der Maschine verteilt.

In der DE 35 37 643 wird eine Leitplatte zum Verbessern der Kühlgasströmungsverteilung im Luftspaltbereich einer drehenden elektrischen Maschine beschrieben. Diese Leitplatte weist ein perforiertes Teil auf, welches die Kühlgasströmung in eine gewünschte Richtung, in diesem Fall durch die Ständerblechpaketbelüftungskanäle, lenkt.

Aber auch die Drukerhöhung des gasförmigen Kühlmediums in einem geschlossenen Kühlkreislauf wurde bereits beschrieben. So wird in der DE 39 25 337 ein gasförmiges Kühlmedium unter hohem Druck in einem geschlossenen Kühlkreislauf verwendet.

Die DE-OS 14 88 079 beschreibt eine Einrichtung zur Vorspülung und Erzeugung von Überdruck, unter anderem auch im Bereich des Wickelkopfes, in einer drehenden elektrischen Hochspannungsmaschine. Zur Vorspülung wird CO₂ als Inertgas eingesetzt. Anschließend wird das CO₂ durch H₂ verdrängt und ein Druck aufgebaut. Insbesondere wird eine Steuervorichtung und Gasmeßvorrichtung zum Betreiben dieser Maschine beschrieben.

In der DE-PS 736 648 werden phasenweise voneinander getrennte Wickelkopfbehälter in einer Hochspannungswechselstrommaschine mit Umlauf des Isolier- bzw. Kühlmittels in Form eines durchschlagfesten oder unbrennbaren Gases beschrieben.

In der DE 43 38 537 wird für einen elektrischen Wandler, es liegt also keine drehende elektrische Maschine vor, die Verwendung von SF₆ als Isoliergas, ebenfalls mit erhöhtem Druck gegenüber dem atmosphärischen Druck, vorgeschlagen, wobei sich innerhalb einer gasdichten Umhüllung aus Isolierstoff um den Magnetkern mit den Wicklungen das Isoliergas befindet.

### Kritik des Standes der Technik

Die bereits bekannten Lösungen sind entweder auf die Verbesserung der Kühlung innerhalb der elektrischen Maschine ausgerichtet oder es geht um Probleme der Verbesserung der Isolation der elektrischen Maschine. Eine Kombination beider Probleme im Wickelkopfbereich einer drehenden elektrischen Maschine war bisher nicht Gegenstand einer Erfindung.

Die Schriften 14 88 079 und 736 648 befassen sich zwar mit der Problematik der Vorspülung bzw. mit der Füllung der Maschine mit einem Inertgas, zeigen jedoch keine technischen Mittel auf, um die insbesondere bei explosionsgeschützten Maschinen erforderliche Vorspülung mit einem von explosionsfähigen Gemischen oder Partikeln völlig befreiten Inertgas effektiv zu gestalten.

Die bekannten, auf die Verbesserung der Kühlung ausgerichteten Lösungen wirken erst im Betrieb der Maschine, bedingt durch die notwendige Lüfterrotation.

Das Problem der Vorspülung mit einem Inertgas wird durch den Stand der Technik nicht ausreichend gelöst.

### Problem

Der im Anspruch 1 angegebenen Erfindung liegt das Problem zugrunde, eine technisch sichere Lösung für einen Explosionsschutz einer drehenden elektrischen Hochspannungsmaschine bei gleichzeitiger Verbesserung der Kühlung im Wickelkopfbereich dieser Maschine zu finden. Gleichzeitig soll dadurch bei Beibehaltung der Maschinenmaße eine höhere Auslastung der Maschine erreicht werden.

### Erzielbare Vorteile

Die mit der Erfindung erzielten Vorteile bestehen insbesondere darin, daß die Durchschlags- und Teilentladungsfestigkeit der elektrischen Maschine erhöht wird. Durch eine definierte Vorspülung mit einem Inertgas wird die Vospülzeit verkürzt. Durch die direkte Hinführung des Inertgases mit erhöhtem Druck in den Wickelkopfbereich wird die Möglichkeit von Teilentladungen in den unvermeidlichen Zwickeln der Isolation an Abstützelementen des Wickelkopfes verhindert und die Kühlung in diesem Bereich wesentlich effektiver gestaltet. Insgesamt kann dadurch die elektrische Maschine höher belastet werden.

### Weitere Ausfestaltungen der Erfindung

Vorteilhafte Ausgestaltungen der Erfindung sind in den Ansprüchen 3 und 4 angegeben. Durch die Anordnung von Drucksensoren und Gasdetektoren im Wickelkopfbereich kann sofort auf einen Druckabfall reagiert bzw. die Vorspülung auf das notwendige Maß verkürzt werden. Durch ein teilweises Ausschäumen außerhalb des Wickelkopftes, aber noch im Wickelkopfbereich, kann während der Inertgasströmung eine definierte Druckverteilung erzielt werden.

### Ausführungsbeispiel

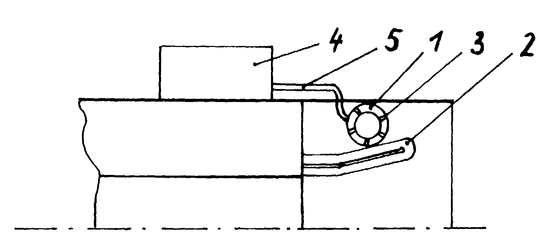

Ein Ausführungsbeispiel der Erfindung ist in der Zeichnung dargestellt und wird im folgenden näher beschrieben.

Die Zeichnung zeigt eine schematische Darstellung der Anordnung des Drucksteuerringes im Wickelkopfbereich einer drehenden elektrischen Maschine.

Die Einrichtung zur Erzeugung von Überdruck im Bereich des Wickelkopfes 2 einer drehenden elektrischen Hochspannungsmaschine, insbesondere von explosionsgeschützten Maschinen, besteht aus einem hohlen Drucksteuerring 1. Dieser Drucksteuerring 1 befindet sich in unmittelbarer Nähe des Wickelkopfes 2 der Maschine. Sinnvollerweise kann hierzu auch der Stützring 1 des Wickelkopfes 2 verwendet werden, sofern er hohl ist. Am Umfang des Drucksteuerringes 1 sind Düsen 3, im einfachsten Fall Löcher 3 mit unterschiedlichem Durchmesser in alle Richtungen des Wickelkopfbereiches angeordnet. Die Lochdurchmesser nehmen mit größer werdenden Abstand von der Gaszuführung des Drucksteuerringes 1 zu. Hierdurch wird der Druckabfall in Längsrichtung des Drucksteuerringes 1 ausgeglichen und der Wickelkopf 2 mit einem überall gleichen Druck umspült. Als Gas wird vorzugsweise Schwefelhexafluorid (SF₆) oder ein SF₆-Inertgasgemisch, welches aus einem Gasbehälter 4 über einen Druckschlauch 5 in den Drucksteuerring 1 gelangt. Im Wickelkopfbereich angeordnete Drucksensoren und Gasdetektoren arbeiten mit dem Gasbehälter 4 bzw. mit einer Druckerzeugeranlage zusammen. Bei Verwendung einer Druckerzeugeranlage befindet sich diese in Reihe zum Kühlkreislauf der Maschine.

Der höchste Gasdruck herrscht während der Gasströmung im Drucksteuerring 1 und am Wickelkopf 2 in der näheren Umgebung der Düsen 3 oder Löcher 3. Für eine definierte Druckabfallsteuerung können die Freiräume neben dem Wickelkopf 2 teilweise oder vollständig mit Strukturschaumstoff mit abgestufter Porengröße ausgeschäumt werden.

Mit der erfindungsgemäßen Einrichtung wird eine sehr effektive Vorspülung sowohl des elektrisch hoch beanspruchten Raumes im Bereich des Wickelkopfes 2 als auch des gesamten übrigen vorher luftgefüllten Hohlraumes mit einem Inertgas erreicht. Damit vermindert sich die Teilentladung an den unvermeidlichen Zwickeln der Isolation von Abstützelementen des Wickelkopfes 2. Die Durchschlagfestigkeit der Maschine erhöht sich. Gleichzeitig wird ein Kühleffekt im Wickelkopfbereich durch das unter Druck stehende Gas erreicht, der noch erhöht werden kann wen im gesamten Kreislauf noch ein Wärmetauscher eingebaut ist.

## Patentansprüche

1. Einrichtung zur Vorspülung mit einem Inertgas und zur Gasfüllung einer elektrischen Hochspannungsmaschine mit einem Rotor.
dadurch gekennzeichnet,
daß das Inertgas zur Vorspülung und zur Gasfüllung verwendet wird und daß zur Erzeugung von Überdruck im Bereich des Wickelkopfes (2) der Stützring (1) des Wickelkopfes (2) oder ein separater Ring (1) als hohler Drucksteuerring (1) ausgebildet ist, der am Umfang mit Düsen (3) unterschiedlichen Durchmessers versehen ist, wobei diese Düsen (3) in alle Richtungen des Wickelkopfraumes gerichtet sind und die Düsenquerschnitte mit größer werdenden Abstand von der Gaszuführung des Drucksteuerringes (1) zunehmen und der Drucksteuerring (1) mit einem Gasbehälter (4), welcher mit dem Inertgas gefüllt ist, über einen Druckschlauch (5) verbunden ist.

2. Einrichtung nach Anspruch 1,
dadurch gekennzeichnet,
daß als Inertgas Schwefelhexafluorid (SF₆) bzw. SF₆-Inertgasgemische vorgesehen sind.

3. Einrichtung nach Anspruch 1 oder 2,
dadurch gekennzeichnet,
daß anstelle des Gasbehälters (4) eine Druckerzeugeranlage vorgesehen ist, die sich in Reihe zum Kühlkreislauf der Maschine befindet.

4. Einrichtung nach einem der Ansprüche 1 bis 3,
dadurch gekennzeichnet,
daß im Wickelkopfraum Drucksensoren bzw. Gasdetektoren angeordnet sind, die mit dem Gasbehälter (4) bzw. mit der Druckerzeugeranlage zusammenarbeiten.

5. Einrichtung nach einem der Ansprüche 1 bis 4,
dadurch gekennzeichnet,
daß Freiräume neben dem Wickelkopf (2) teilweise oder vollständig mit Struktur-Schaumstoff, der eine abgestufte Porengröße besitzt, ausgeschäumt sind.
